# EUROPEAN PATENT SPECIFICATION

(11) **EP 4 121 673 B1**
(45) Date of publication and mention of the grant of the patent: **27.03.2024**
(21) Application number: 21715970.6
(22) Date of filing: 11.03.2021
(51) Int. Cl.: F16K 17/30, G05D 16/04, G05D 16/10, H01M 8/04089, H01M 8/04082

(54) **A VALVE FOR FUEL CELL VEHICLE SYSTEMS WITH A SECONDARY SAFETY DEVICE**
VENTIL FÜR BRENNSTOFFZELLENFAHRZEUGSYSTEME MIT EINER SEKUNDÄREN SICHERHEITSVORRICHTUNG
SOUPAPE POUR SYSTÈMES DE VÉHICULE À PILE À COMBUSTIBLE AVEC UN DISPOSITIF DE SÉCURITÉ SECONDAIRE

(30) Priority: 18.03.2020 IT 202000005749
(43) Date of publication of application: 25.01.2023
(73) Proprietor: OMB Saleri S.p.A. - Societa' Benefit, 25126 Brescia (IT)
(72) Inventor: BORONI, Diego, 25126 Brescia (IT); MORELLI, Giacomo, 25126 Brescia (IT); MONDINELLI, Francesco, 25126 Brescia (IT); SANTULLI, Renato, 25126 Brescia (IT); PERONI, Davide, 25126 Brescia (IT)
(74) Representative: Pulieri, Gianluca Antonio
(86) International application number: PCT/IB2021/052035
(87) International publication number: WO 2021/186303

(56) References cited:
- EP-A1- 1 396 774
- WO-A1-02/084423
- US-A1- 2015 337 769
- US-A1- 2016 281 871
- US-A1- 2017 115 673

## Description

The present invention belongs to the sector of components for fuel cell vehicle systems, designed for installation on board vehicles, such as motor vehicles, commercial vehicles, vehicles for transporting goods and people. In particular, a valve for managing the flow of gas, in particular, hydrogen, between a tank and the fuel cell group, is the subject of the present invention.

As known, a fuel cell vehicle system comprises a tank for storing high-pressure hydrogen, up to 350 or 700 bars, a multi-function valve (often referred to as an OTV valve), applied to the tank, a pressure reducing valve (referred to as HPR valve), downstream of the OTV valve, further secondary valves, downstream of the HPR valve, and finally the fuel cell group for producing an electric current.

Due to the elevated pressure of storing hydrogen in the tank, the role of the HPR valve is fundamental; in fact, if the hydrogen were supplied to the fuel cell group at elevated pressures, it would risk breaking. Therefore, it is essential to also comprise safety systems to prevent the high-pressure hydrogen from reaching the fuel cell group.

To this end, known HPR valves today comprise a safety device (called a PRV valve), which, on detecting a pressure greater than a threshold value at the HPR valve outlet, allow the sudden release of hydrogen. Such a valve is known from document US2015/337769 A1.

It is the object of the present invention to obtain a pressure reducing valve, which further increases the level of safety.

Such object is achieved by a pressure reducing valve according to claim 1. The dependent claims identify further advantageous embodiments of the invention.

The features and advantages of the pressure reducing valve according to the present invention will become apparent from the following description, given by way of a non-limiting example, according to the figures of the accompanying drawings, wherein:

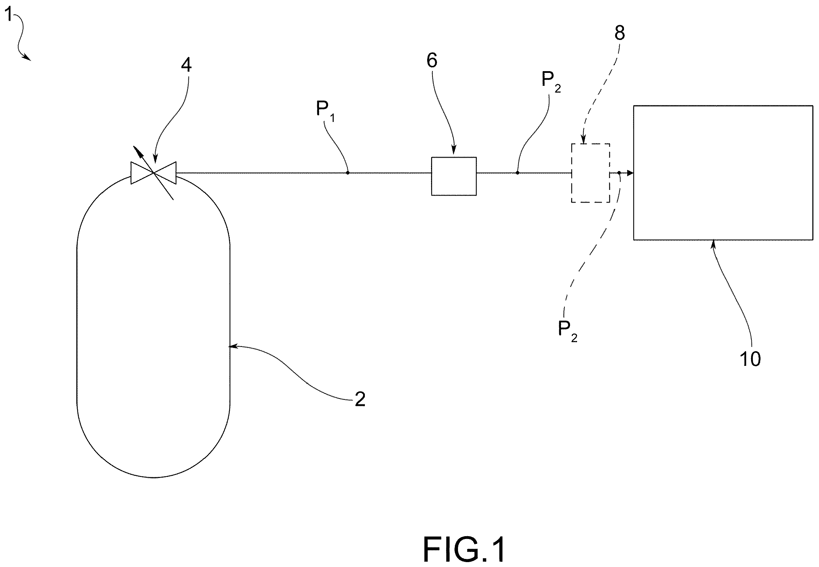

- figure 1 shows a diagram of a fuel cell vehicle system, comprising an HPR valve according to an embodiment of the invention;

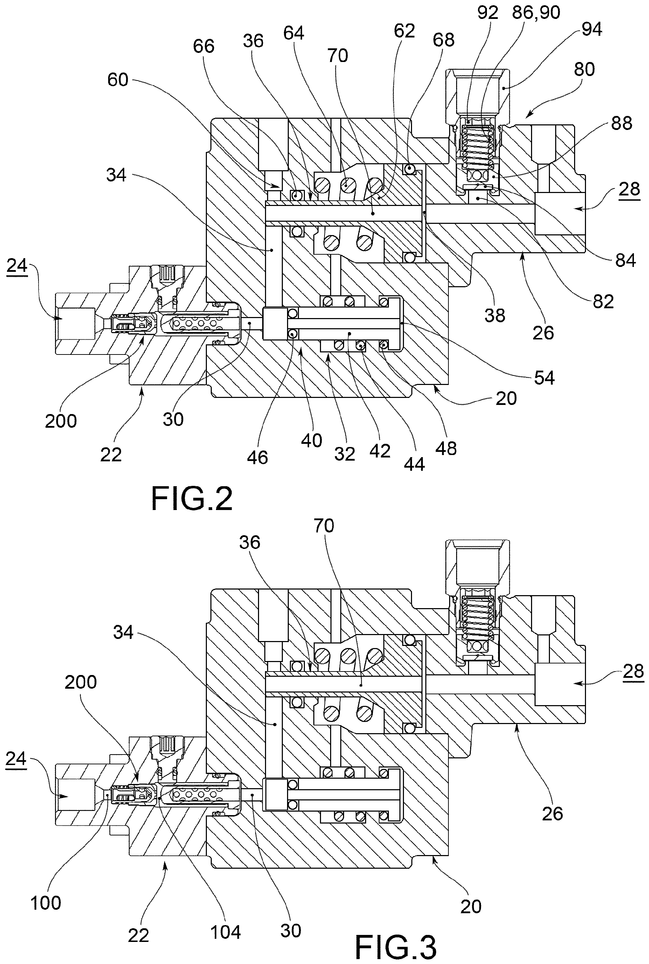

- figure 2 illustrates a sectional view of the pressure reducing valve, in a configuration of normal operation;
- figure 3 represents a sectional view of the pressure reducing valve, in a configuration of activation of a secondary safety device;

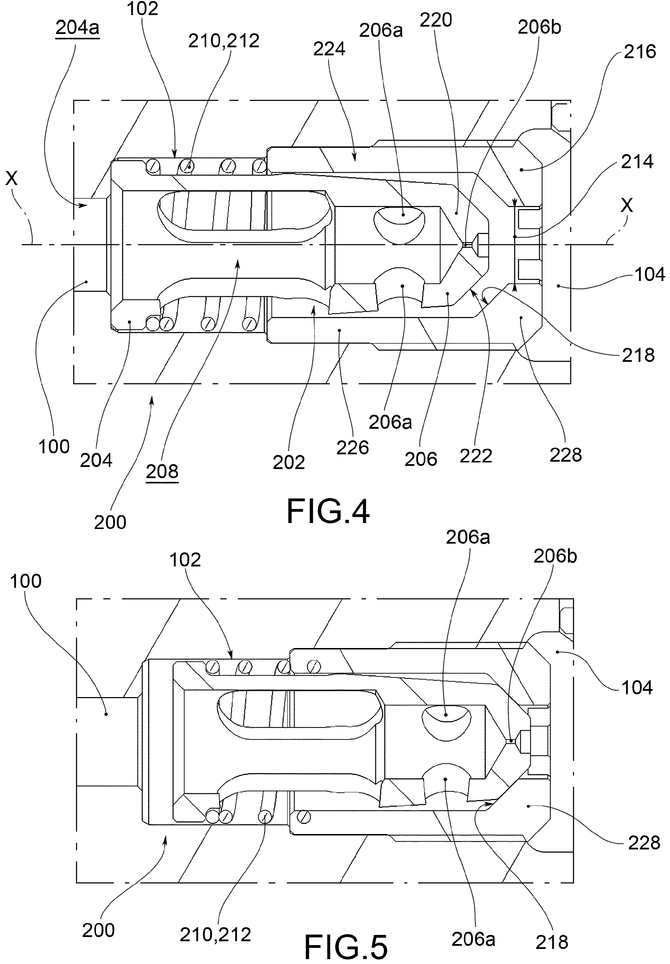

- figure 4 shows an enlargement of a part of the pressure reducing valve, wherein the secondary safety device is in a configuration of non-activation; and
- figure 5 shows an enlargement of a part of the pressure reducing valve, wherein the secondary safety device is in a configuration of activation.

With reference to the figures of the accompanying tables, an example of a fuel cell vehicle system is globally denoted with 1, comprising:
- a tank 2 for storing high-pressure hydrogen, for example, up to 350 or 700 bars;
- a multi-function or OTV 4 valve, applied to the tank 2 and adapted to regulate the inlet of gas to the tank when refueling and the outlet of gas when using the system, preferably, in addition to having further safety functions;
- a pressure reducing valve or HPR 6 valve, arranged downstream of the OTV 4 valve, adapted to reduce the pressure from an upstream value p1, with which the gas exits the OTV 4 valve, to a downstream value p2;
- preferably, further secondary valves 8, arranged downstream of the HPR 6 value; and
- a fuel cell group 10, adapted to produce an electric current by means of transforming the hydrogen.

For reasons of clarity, a pressure reducing valve according to an embodiment will be described below; however, the invention is also applicable to reducing valves having a different configuration.

The HPR 6 valve comprises a valve body 20, for example, made in a single piece of a metal material, typically of aluminum, a first stage unit or high-pressure stage unit 40, arranged in the valve body 20, and a second stage unit or low-pressure stage unit 60, arranged in the valve body 20 downstream of the first stage unit 40.

The HPR 6 valve further comprises an inlet body 22, having an inlet 24, applied to the valve body 20 upstream of the first stage unit 40, and an outlet body 26, having an outlet 28, applied to the valve body 20 downstream of the second stage unit 60.

The valve body 20 has a calibrated inlet passage 30, a first stage piston chamber 32, an intermediate passage 34, a second stage piston chamber 36 and an outlet passage 38.

The first stage unit 40 comprises a first stage piston 42, elastic thrust means 44, a front gasket 46 and a rear gasket 48. The first stage piston 42, cooperating with the gaskets, 46, 48, is slidable sealingly housed in the first stage piston chamber 32.

The first stage piston 42 is configured to act as a splitter between the inlet passage 30 and the intermediate passage 34.

The second stage unit 60 comprises a second stage piston 62 , elastic thrust means 64, a front gasket 66 and a rear gasket 68. An internal passage 70 is made between the ends of the second stage piston 62. The second stage piston 62, cooperating with the gaskets, 66, 68, is slidable sealingly housed in the second stage piston chamber 36.

The second stage piston 62 is configured to act as a splitter between the intermediate passage 34 and the internal passage 70 or the outlet passage 38.

In a configuration of normal operation of the HPR valve, the opening action made on the first stage piston 42 by the pressure of the gas present in the inlet passage 30 and by the thrust means 44 is balanced by the closing action made on the first stage piston 42 by the pressure of the gas present in a bottom compartment 54; in such a configuration, the first stage piston 42 splits the passage between the inlet passage 30 and the intermediate passage 34, causing a drop in pressure.

Similarly, in such configuration, the opening action made on the second stage piston 62 by the pressure of the gas present in the intermediate passage 34 and by the thrust means 64 is balanced by the closing action made on the second stage piston 62 by the pressure of the gas present in the outlet passage 38; in such a configuration, the second stage piston 62 splits the passage between the intermediate passage 34 and the internal passage 70 or the outlet passage 38, causing a further drop in pressure.

The HPR 6 valve further comprises a primary safety device 80 adapted to make a sudden exit of the gas from the outlet passage 38 when the pressure of the gas in said outlet passage 38 exceeds a predetermined threshold value.

For example, the outlet body 26 is provided with a safety passage 82 in communication with the outlet passage 38, which is closed by a shutter 84 of the primary safety device 80. Said primary safety device 80 further comprises thrust means 86 adapted to permanently act in order to keep the shutter 84 on closing of the safety passage 82.

When the pressure of the gas in the outlet passage 38 exceeds the predetermined threshold value, the shutter 84 opens the safety passage 82 and the gas suddenly exits outside through said safety passage 82, for example, by passing inside a shutter-door 88 of the primary safety device 80, inside a spring 90 of the thrust means 86 and through a vent hole 92 made in a closing body 94 of the primary safety device 80.

From the configuration of normal operation, it is possible that, for example, due to a jamming of the first stage piston or the second stage piston, the gas pressure in the outlet passage 38 increases, until it exceeds the predetermined threshold value, causing the activation of the primary safety device 80.

Preferably, the primary safety device 80 is reversible, since when the gas pressure in the outlet passage 38 returns below the threshold value, the shutter 84 closes the safety passage 82 again, and the HPR valve 6 returns to normal operation, if the conditions are right.

Furthermore, according to the invention, there is comprised a secondary safety device 200, mechanically independent of the first stage unit 40, preferably acting upstream of the first stage unit 40, to limit the passage of gas from the inlet 24 to the inlet passage 30 when the gas flow exceeds a predetermined threshold value.

According to an embodiment, the inlet body 22 has an upstream duct 100 with a calibrated section, in communication with the inlet 24, a main compartment 102, upstream of which the upstream duct 100 opens out, and a downstream duct 104, downstream of the main compartment 102, in communication with the inlet passage 30 of the valve body 20.

The secondary safety device 200 comprises a flow shutter 202 accommodated in the main compartment 102, which is configured to be hit by the gas flow passing from the upstream duct 100 towards the downstream duct 104 and movable beneath the action of said gas flow to limit the passage of the gas from the upstream duct 100 towards the downstream duct 104.

According to a preferred embodiment, the flow shutter 202 consists of an element extending along a shutter axis X, between an upstream end 204, facing the upstream duct 100, and a downstream end 206, facing the downstream duct 104. The flow shutter 202 has an internal shutter passage 208, between the upstream end 204, where at least one inlet opening 204a opens, and the downstream end 206, where at least one outlet opening 206a opens.

For example, the inlet opening 204a is arranged on a plane orthogonal to the shutter axis X, for example, coaxial to the section of the upstream duct 100 and preferably has a greater diameter than that of the section of the upstream duct 100.

For example, furthermore, a plurality of outlet openings 206a is provided, arranged in a ring, forming radial passages between the shutter passage 208 and the downstream duct 104.

Preferably, furthermore, an auxiliary opening 206b is present at the downstream end 206, for example, coaxial to the inlet opening 204a.

The secondary safety device 200 further comprises thrust means 210, comprising, for example, a spring 212, permanently acting on the flow shutter 202 to keep the gas passing from the upstream duct 100 to the downstream duct 104.

For example, the thrust means 210 act to keep the upstream end 204 of the flow shutter 202 in abutment against the wall in which the upstream duct 100 opens.

According to a preferred embodiment, the connection between the main compartment 102 and the downstream duct 104 is made by a main aperture 214, which, in order to limit the passage of gas towards the downstream duct, 104, is closed by the downstream end 206 of the flow shutter 202.

For example, the main aperture 214 is delimited by an abutment wall 216, having a truncated-cone shaped abutment surface 218, converging towards the main aperture 214. Correspondingly, the downstream end 206 of the flow shutter 202 comprises an annular closing wall 220, having a truncated-cone shaped closing surface 222, converging in the closing direction.

According to a preferred embodiment, the secondary safety device 200 comprises a compass 224, accommodated in the main compartment 102, for example, screwed therein, comprising an annular guide wall 226, having an axial extension, and a bottom wall 228, having a radial extension, in which the main aperture 214 opens.

Preferably, the outer dimension of the flow shutter 202 is defined so that said shutter is translationally guided by the guide wall 226.

In a rest configuration of the secondary safety device, in which the gas flow from the upstream duct 100 towards the downstream duct 104 is less than a predetermined threshold value, the main aperture 214 is not obstructed and the gas passes from the upstream duct 100 towards the downstream duct 104. In such a configuration, the flow shutter 202 is in a limit opening position, which is such as to keep the main aperture 214 free; for example, in the limit opening position, the flow shutter 202 is in abutment against the wall in which the upstream duct 100 opens, and is kept in such a position by the action of the thrust means 210.

In a configuration of activation of the secondary safety device 200, in which the gas flow from the upstream duct 100 towards the downstream duct 104 is greater than a predetermined threshold value, the main aperture 214 is obstructed by the flow shutter 202 and the passage of gas from the upstream duct 100 towards the downstream duct 104 is lowered or stopped. In such a configuration, the action of the gas flow on the shutter has overcome the action of the thrust means 210 and the flow shutter 202 is in a limit closing position, which is such as to split or close the main aperture 214; for example, in the limit closing position, the flow shutter 202 is in abutment against the abutment wall 216, in which the main aperture 214 opens.

However, the secondary safety device 200 is configured to act in a mechanically independent manner of the first stage unit 40, in the sense that it is not influenced by the configuration of the latter, for example, by the position taken by the components thereof. Advantageously, this ensures the intervention of said secondary safety device 200 also when there is a jamming of the first stage unit, as well as of the second stage unit.

Overall, the HPR valve, equipped with the secondary safety device 200, comprises three operating configurations:
- a configuration of normal operation, in which the gas pressure of the second stage unit 60, i.e. in the outlet passage 38, is less than a threshold value and the gas flow upstream of the first stage unit 40, i.e. passing from the upstream duct 100 to the downstream duct 104, is less than a threshold value; in such a configuration, the primary safety device 80 is deactivated and the secondary safety device is deactivated;
- a first anomaly configuration, in which the gas pressure downstream of the second stage unit 60 is greater than a threshold value and the gas flow upstream of the first stage unit 40 is less than a threshold value; in such a configuration, the primary safety device 80 is activated (the gas exits outside) and the secondary safety device is deactivated;
- a second anomaly configuration, in which the gas pressure downstream of the second stage unit 60 is greater than a threshold value and the gas flow upstream of the first stage unit 40 is greater than a threshold value; in such a configuration, the primary safety device 80 is activated and the secondary safety device is activated (the flow of gas to the first stage unit is lowered or stopped).

Innovatively, the valve according to the present invention, equipped with secondary safety device, allows an increase in the level of reliability, since it blocks the gas flow upstream of the pressure reducer, in the case where, despite the gas exiting outside due to an overpressure, the flow of gas towards the pressure reducer continues to increase.

As anticipated, the pressure reducing valve described above is one example of application of the invention.

According to a further variant, the pressure reducing valve is devoid of a primary safety device arranged downstream of the second reducing stage or downstream of the single reducing stage, and is provided only with the secondary safety device, arranged upstream of the first reducing stage.

According to the variants described above, the pressure reducing stages are mechanical.

According to a further variant, at least one of the reducing stages is electronic. In other words, in such an embodiment variant, the piston, which creates the restriction causing the reduction in pressure, is activated by a proportional solenoid, to which a signal is sent which is representative of the gas pressure upstream of the piston and translationally controls said piston so as to increase or reduce the restriction, thus decreasing or increasing the gas pressure downstream of the piston, respectively.

Clearly, in order to satisfy contingent needs, a person skilled in the art can make changes to the reducing valve described above, all contained in the scope of protection as defined by the following claims.

## Claims

1. A pressure reducing valve (6) for a fuel cell vehicle system, comprising an inlet (24), in which the gas is present at an upstream pressure (p1), an outlet (28), in which the gas is present at a downstream pressure (p2), a first stage unit (40) adapted to reduce the pressure from the upstream pressure (p1) to an intermediate pressure, a second stage unit (60), arranged downstream of the first stage unit (40), adapted to reduce the pressure from the intermediate pressure to the downstream pressure (p2), and a secondary safety device (200) acting between the inlet (24) and the first stage unit (40), said secondary safety device (200) being adapted, in a closing configuration, to lower or stop the gas flow between the inlet (24) and the first stage unit (40) when the gas flow exceeds a preset threshold flow, **characterized in that** the secondary safety device (200) is mechanically independent of the first stage unit (40).

2. A reducing valve according to claim 1, wherein the secondary safety device (200) comprises a flow shutter (202) arranged between an upstream duct (100) in communication with the inlet (24), and a downstream duct (104) in communication with the outlet (28), said shutter (202) being hit by the gas flow passing from the upstream duct (100) towards the downstream duct (104).

3. A reducing valve according to claim 2, wherein the flow shutter (202) consists of an element extending along a shutter axis (X), between an upstream end (204) facing the upstream duct (100), and a downstream end (206) facing the downstream duct (104), and having an internal shutter passage (208) between the upstream end (204), where at least one inlet opening (204a) opens, and the downstream end (206), where at least one outlet opening (206a) opens.

4. A reducing valve according to claim 3, wherein the inlet opening (204a) is arranged on a plane orthogonal to the shutter axis (X), for example, coaxial to the section of the upstream duct (100).

5. A reducing valve according to claim 4, wherein the inlet opening (204a) has a larger diameter than that of a passage section of the upstream duct (100).

6. A reducing valve according to any one of claims 3 to 5, wherein a plurality of outlet openings (206a) are provided, arranged in a ring, forming radial passages between the shutter passage (208) and the downstream duct (104) .

7. A reducing valve according to any one of the preceding claims, wherein the secondary safety device (200) comprises an auxiliary opening (206b) configured to connect the shutter passage (208) and the downstream duct (104) also when said secondary safety device (200) is in the closing configuration, limiting the gas flow passing between said shutter passage (208) and said downstream duct (104).

8. A reducing valve according to any one of the preceding claims, wherein the secondary safety device (200) comprises thrust means (210) permanently acting on the flow shutter (202) in the sense of keeping the passage of gas from the upstream duct (100) to the downstream duct (104) .

9. A reducing valve according to any one of the preceding claims, in which the flow shutter (202) is movable in a main compartment (102), and in which the main compartment (102) is in communication with the downstream duct (104) by means of a main aperture (214), which, in order to limit the passage of gas towards the downstream duct (104), is closed by the downstream end (206) of the flow shutter (202) in said closed configuration.

10. A reducing valve according to claim 9, wherein the main aperture (214) is delimited by an abutment wall (216) having a truncated cone shaped abutment surface (218), converging towards the main aperture (214), and the downstream end (206) of the flow shutter (202) comprises an annular closing wall (220) having a truncated cone-shaped closing surface (222) for abutting against the abutment surface (218).

11. A reducing valve according to any one of the preceding claims, comprising a primary safety device (80) adapted to cause the gas to exit when a reference pressure exceeds a predetermined threshold value.

12. A reducing valve according to claim 11, wherein the primary safety device (80) acts downstream of the first stage unit (40) and upstream of the second stage unit (60) .

13. A reducing valve according to claim 11, wherein the primary safety device (80) acts downstream of the second stage unit (60).

14. A reducing valve according to any one of claims 11 to 13, wherein the primary safety device (80) is reversible.

15. A reducing valve according to any one of the preceding claims, wherein the first stage unit is mechanical or electronic.

16. A reducing valve according to any one of the preceding claims, wherein the second stage unit is mechanical or electronic.

## Patentansprüche

1. Druckreduzierventil (6) für ein Brennstoffzellenfahrzeugsystem, umfassend einen Einlass (24), in dem das Gas mit einem stromaufwärtigen Druck bzw. Eingangsdruck (p1) vorhanden ist, und einen Auslass (28), in dem das Gas mit einem stromabwärtigen Druck bzw. Ausgangsdruck (p2) vorhanden ist, eine erste Stufeneinheit (40), die angepasst ist, den Druck von dem stromaufwärtigen Druck (p1) auf einen Zwischendruck zu reduzieren, eine zweite Stufeneinheit (60), die stromabwärts der ersten Stufeneinheit (40) angeordnet und angepasst ist, den Druck von dem Zwischendruck auf den stromabwärtigen Druck (p2) zu reduzieren, und eine sekundäre Sicherheitsvorrichtung (200), die zwischen dem Einlass (24) und der ersten Stufeneinheit (40) wirkt, wobei die sekundäre Sicherheitsvorrichtung (200) angepasst ist, in einer Schließkonfiguration den Gasstrom zwischen dem Einlass (24) und der ersten Stufeneinheit (40) zu senken oder zu stoppen, wenn der Gasstrom einen voreingestellten Schwellenfluss überschreitet, **dadurch gekennzeichnet, dass** die sekundäre Sicherheitsvorrichtung (200) mechanisch unabhängig von der ersten Stufeneinheit (40) ist.

2. Reduzierventil nach Anspruch 1, wobei die sekundäre Sicherheitsvorrichtung (200) einen Strömungsverschließer (202) umfasst, der zwischen einem stromaufwärtigen Kanal (100) in Kommunikation bzw. Verbindung mit dem Einlass (24) und einem stromabwärtigen Kanal (104) in Kommunikation bzw. Verbindung mit dem Auslass (28) angeordnet ist, wobei der Verschließer (202) von dem Gasstrom getroffen wird, der von dem stromaufwärtigen Kanal (100) zu dem stromabwärtigen Kanal (104) strömt.

3. Reduzierventil nach Anspruch 2, wobei der Strömungsverschließer (202) aus einem Element besteht, das sich entlang einer Verschließerachse (X) zwischen einem stromaufwärtigen Ende (204), das dem stromaufwärtigen Kanal (100) zugewandt ist, und einem stromabwärtigen Ende (206) erstreckt, das dem stromabwärtigen Kanal (104) zugewandt ist, und einen internen Verschließerdurchgang (208) zwischen dem stromaufwärtigen Ende (204), wo sich zumindest eine Einlassöffnung (204a) öffnet, und dem stromabwärtigen Ende (206), wo sich zumindest eine Auslassöffnung (206a) öffnet, aufweist.

4. Reduzierventil nach Anspruch 3, wobei die Einlassöffnung (204a) auf einer Ebene orthogonal zu der Verschließerachse (X) angeordnet ist, und zwar beispielsweise koaxial zu dem Abschnitt des stromaufwärtigen Kanals (100).

5. Reduzierventil nach Anspruch 4, wobei die Einlassöffnung (204a) einen größeren Durchmesser als denjenigen eines Durchgangsabschnitts des stromaufwärtigen Kanals (100) aufweist.

6. Reduzierventil nach einem der Ansprüche 3 bis 5, wobei eine Mehrzahl von Auslassöffnungen (206a) bereitgestellt sind, die ringförmig angeordnet sind und radiale Durchgänge zwischen dem Verschließerdurchgang (208) und dem stromabwärtigen Kanal (104) bilden.

7. Reduzierventil nach einem der vorhergehenden Ansprüche, wobei die sekundäre Sicherheitsvorrichtung (200) eine Hilfsöffnung (206b) umfasst, die konfiguriert ist, den Verschließerdurchgang (208) und den stromabwärtigen Kanal (104) zu verbinden, auch wenn sich die sekundäre Sicherheitsvorrichtung (200) in der Schließkonfiguration befindet, was den Gasstrom, der zwischen dem Verschließerdurchgang (208) und dem stromabwärtigen Kanal (104) verläuft, begrenzt.

8. Reduzierventil nach einem der vorhergehenden Ansprüche, wobei die sekundäre Sicherheitsvorrichtung (200) Schubmittel (210) umfasst, die permanent auf den Strömungsverschließer (202) wirken, um den Durchtritt von Gas von dem stromaufwärtigen Kanal (100) zu dem stromabwärtigen Kanal (104) beizubehalten.

9. Reduzierventil nach einem der vorhergehenden Ansprüche, wobei der Strömungsverschließer (202) in einem Hauptfach (102) beweglich ist und wobei das Hauptfach (102) mit dem stromabwärtigen Kanal (104) mittels einer Hauptöffnung (214) in Kommunikation bzw. Verbindung ist, die, um den Durchgang von Gas in Richtung des stromabwärtigen Kanals (104) zu begrenzen, durch das stromabwärtige Ende (206) des Strömungsverschließeres (202) in der geschlossenen Konfiguration geschlossen ist.

10. Reduzierventil nach Anspruch 9, wobei die Hauptöffnung (214) durch eine Anlagewand (216) begrenzt ist, die eine kegelstumpfförmige Anlagefläche bzw. -oberfläche (218) aufweist, die zu der Hauptöffnung (214) hin konvergiert, und das stromabwärtige Ende (206) des Strömungsverschließeres (202) eine ringförmige Schließwand (220) mit einer kegelstumpfförmigen Schließfläche bzw. -oberfläche (222) zur Anlage an der Anlagefläche (218) umfasst.

11. Reduzierventil nach einem der vorhergehenden Ansprüche, umfassend eine primäre Sicherheitsvorrichtung (80), die angepasst ist zu bewirken, dass das Gas austritt, wenn ein Referenzdruck einen vorgegebenen Schwellenwert überschreitet.

12. Reduzierventil nach Anspruch 11, wobei die primäre Sicherheitsvorrichtung (80) stromabwärts der ersten Stufeneinheit (40) und stromaufwärts der zweiten Stufeneinheit (60) wirkt.

13. Reduzierventil nach Anspruch 11, wobei die primäre Sicherheitsvorrichtung (80) stromabwärts der zweiten Stufeneinheit (60) wirkt.

14. Reduzierventil nach einem der Ansprüche 11 bis 13, wobei die primäre Sicherheitsvorrichtung (80) reversibel ist.

15. Reduzierventil nach einem der vorhergehenden Ansprüche, wobei die erste Stufeneinheit mechanisch oder elektronisch ist.

16. Reduzierventil nach einem der vorhergehenden Ansprüche, wobei die zweite Stufeneinheit mechanisch oder elektronisch ist.

## Revendications

1. Détendeur (6) pour système de véhicule à pile à combustible, comprenant une entrée (24), dans laquelle le gaz est présent à une pression amont (p1), une sortie (28), dans laquelle le gaz est présent à une pression aval (p2), une unité de premier étage (40) adaptée pour réduire la pression de la pression amont (p1) à une pression intermédiaire, une unité de second étage (60), agencée en aval de l'unité de premier étage (40), adaptée pour réduire la pression de la pression intermédiaire à la pression aval (p2), et un dispositif de sécurité secondaire (200) agissant entre l'entrée (24) et l'unité de premier étage (40), ledit dispositif de sécurité secondaire (200) étant adapté, dans une configuration de fermeture, pour réduire ou couper le flux de gaz entre l'entrée (24) et l'unité de premier étage (40) lorsque le flux de gaz dépasse un flux de seuil prédéfini, **caractérisé en ce que** le dispositif de sécurité secondaire (200) est mécaniquement indépendant de l'unité de premier étage (40).

2. Détendeur selon la revendication 1, dans lequel le dispositif de sécurité secondaire (200) comprend un obturateur de flux (202) agencé entre un conduit amont (100) en communication avec l'entrée (24), et un conduit aval (104) en communication avec la sortie (28), ledit obturateur (202) étant touché par le flux de gaz passant du conduit amont (100) vers le conduit aval (104).

3. Détendeur selon la revendication 2, dans lequel l'obturateur de flux (202) consiste en un élément s'étendant le long d'un axe d'obturateur (X), entre une extrémité amont (204) faisant face au conduit amont (100), et une extrémité aval (206) faisant face au conduit aval (104), et présentant un passage d'obturateur interne (208) entre l'extrémité amont (204), où s'ouvre au moins une ouverture d'entrée (204a), et l'extrémité aval (206), où s'ouvre au moins une ouverture de sortie (206a).

4. Détendeur selon la revendication 3, dans lequel l'ouverture d'entrée (204a) est agencée sur un plan orthogonal à l'axe d'obturateur (X), par exemple, coaxial à la section du conduit amont (100).

5. Détendeur selon la revendication 4, dans lequel l'ouverture d'entrée (204a) présente un diamètre supérieur à celui d'une section de passage du conduit amont (100).

6. Détendeur selon l'une quelconque des revendications 3 à 5, dans lequel une pluralité d'ouvertures de sortie (206a) sont prévues, agencées en cercle, formant des passages radiaux entre le passage d'obturateur (208) et le conduit aval (104).

7. Détendeur selon l'une quelconque des revendications précédentes, dans lequel le dispositif de sécurité secondaire (200) comprend une ouverture auxiliaire (206b) configurée pour raccorder le passage d'obturateur (208) et le conduit aval (104) aussi lorsque ledit dispositif de sécurité secondaire (200) se trouve dans la configuration de fermeture, limitant le flux de gaz passant entre ledit passage d'obturateur (208) et ledit conduit aval (104).

8. Détendeur selon l'une quelconque des revendications précédentes, dans lequel le dispositif de sécurité secondaire (200) comprend des moyens de poussée (210) agissant en permanence sur l'obturateur de flux (202), au sens qu'ils maintiennent le passage de gaz du conduit amont (100) au conduit aval (104).

9. Détendeur selon l'une quelconque des revendications précédentes, dans lequel l'obturateur de flux (202) est mobile dans un compartiment principal (102), et dans lequel le compartiment principal (102) est en communication avec le conduit aval (104) au moyen d'une ouverture principale (214) qui, afin de limiter le passage de gaz vers le conduit aval (104), est fermée par l'extrémité aval (206) de l'obturateur de flux (202) dans ladite configuration fermée.

10. Détendeur selon la revendication 9, dans lequel l'ouverture principale (214) est délimitée par une paroi de butée (216) présentant une surface de butée tronconique (218), convergeant vers l'ouverture principale (214), et l'extrémité aval (206) de l'obturateur de flux (202) comprend une paroi de fermeture annulaire (220) présentant une surface de fermeture tronconique (222) destinée à venir en butée contre la surface de butée (218).

11. Détendeur selon l'une quelconque des revendications précédentes, comprenant un dispositif de sécurité primaire (80) adapté pour provoquer la sortie du gaz lorsqu'une pression de référence dépasse une valeur de seuil prédéterminée.

12. Détendeur selon la revendication 11, dans lequel le dispositif de sécurité primaire (80) agit en aval de l'unité de premier étage (40) et en amont de l'unité de second étage (60).

13. Détendeur selon la revendication 11, dans lequel le dispositif de sécurité primaire (80) agit en aval de l'unité de second étage (60).

14. Détendeur selon l'une quelconque des revendications 11 à 13, dans lequel le dispositif de sécurité primaire (80) est réversible.

15. Détendeur selon l'une quelconque des revendications précédentes, dans lequel l'unité de premier étage est mécanique ou électronique.

16. Détendeur selon l'une quelconque des revendications précédentes, dans lequel l'unité de second étage est mécanique ou électronique.
